# EUROPEAN PATENT APPLICATION

(11) **EP 4 624 503 A1**
(43) Date of publication of application: **01.10.2025**
(21) Application number: 24167812.7
(22) Date of filing: 28.03.2024
(51) Int. Cl.: C08G 18/10, C08G 18/48, C08G 18/75, C08G 18/76, C09J 175/08

(54) **CURABLE POLYURETHANE COMPOSITION WITH ISOCYANURATE SILANES**

(71) Applicant: Sika Technology AG, 6340 Baar (CH)
(72) Inventor: DURMIC, Berzad, 5621 Zufikon (CH)
(74) Representative: Sika Patent Attorneys

(57) **Abstract**

The invention relates to a curable polyurethane composition comprising
at least one isocyanate group-containing polyurethane polymer with a maximal content of 0.5 wt.-% of monomeric diisocyanate obtained from the reaction of at least one diisocyanate monomer with at least one polyether polyol in an NCO/OH molar ratio of at least 3/1 and by subsequent removal of the majority of the monomer diisocyanate using a suitable separation method and furthermore comprising at least one isocyanurate silane.

The curable polyurethane composition can be formulated to show excellent properties for primerless adhesion on metals, plastic and paint coatings and other industrial substrates. Further advantages of the inventive composition include generally good performance characteristics, particularly overpaintability, low emissions of odor, durability and resistance to ageing and weathering. Furthermore, the inventive composition is safe to handle without special protective measures.

## Description

### Technical Field

The invention relates to the field of curable polyurethane compositions and their use as elastic adhesives, coatings and sealants in construction and manufacturing industry.

### Prior Art

Curable compositions based on polyurethanes (abbreviated PU or PUR), which crosslink by reaction of isocyanate groups with moisture and cure to form elastomers, are used in particular for elastic bonding of components in assembly, for filling joints, as floor coatings or as roof sealants. They are also widely used as versatile construction adhesives, for example for the installation of windowpanes in means of transportation such as trains or cars. Due to their good adhesion and elasticity, they can gently dampen and bridge forces acting on the substrates, caused by vibrations or temperature fluctuations, for example.

Such polyurethane compositions should exhibit good and durable adhesion on a variety of substrates, such as metals, alloys, steel, plastic, ceramics but also vehicle paint coatings and varnish. Depending on the substrate to which they are applied, however, polyurethane compositions sometimes reach their limits in terms of adhesion performance. Adhesion to modern automotive materials, for example, is a challenge, as they have a smooth, hard surface. Successful bonding, for example of windscreens, with a one-component polyurethane composition to automotive paint is highly dependent on the quality of the paint substrate, the substrate preparation process and the conditions selected for bonding.

Surfaces that are difficult to adhere to usually require extensive pre-treatment, for example in the form of mechanical pre-treatment such as sanding or roughening, or chemical-physical pre-treatment in the form of a primer or activator. However, this is not always possible in transportation or automotive production lines, for example, as the solvents that are usually contained in pre-treatment agents are problematic in the production line. Furthermore, such pretreatments are time-consuming and cost-intensive and therefore undesirable.

Polyurethane compositions can be formulated as one-component or two-component compositions. One-component polyurethane compositions have the advantage that they do not need to be mixed before or during application and are therefore more popular in many applications, and users of these processes appreciate the simpler and more error-resistant application of one-component polyurethane adhesives. One-component polyurethane compositions cure by reacting the isocyanate groups with moisture, usually atmospheric moisture, whereby curing takes place by diffusion of water from the outside to the inside of the applied adhesive.

Such polyurethan compositions consist of isocyanate group-containing polymers, which are produced by reacting polyols with monomeric diisocyanates, commonly using an NCO/OH ratio of around 2/1. The polymers obtained in this way contain a residual content of monomeric diisocyanates due to chain extension reactions. Typically, the amount of monomeric diisocyanates is in the range of 1 to 3% by weight. Monomeric diisocyanates are potentially harmful to health. In some countries compositions containing monomeric diisocyanates from a concentration of above 0.1 % by weight must be labeled with hazard symbols and warnings on the label and in data sheets and can only be sold and used under certain conditions. Such isocyanate-group-containing polymers have a low content of monomeric diisocyanates are described for example in EP3833702*.*

In terms of final product properties, the most attractive route to isocyanate group-containing polymers with a low content of monomeric diisocyanates is to use the monomeric diisocyanate in excess during polymer production and then remove the majority of the unreacted monomeric diisocyanate by means of a suitable separation process, in particular by distillation. Polymers from this process have a comparatively low viscosity and a low residual content of monomeric diisocyanates. This process thus is ideally suited for the production of low diisocyanate monomer polyurethane compositions which exhibit good storage stability and good application.

There is therefore a need for a polyurethane composition which can bond on many substrates and does not require any special mechanical or chemical-physical pre-treatment of the paint surface before bonding and at the same time contains less than 0.1% by weight of monomeric diisocyanates.

### Summary of the Invention

Therefore, the object of the present invention is to provide a polyurethane composition based on isocyanate group-containing polymers with low diisocyanate monomer content which does not require any pre-treatment to show adequate adhesion performance.

Surprisingly, this object could be achieved by achieved by the curable polyurethane composition with the features of independent claim 1. The isocyanurate silane within the composition according to the invention is based on a isocyanurate ring which contains reactive silane groups, especially tris(3-(trimethoxysilyl)propyl)isocyanurate.

Such curable polyurethane compositions according to the present invention are especially suitable for primerless adhesion on metals, plastic and paint coatings and other industrial substrates. Further advantages of the inventive composition include generally good performance characteristics, particularly overpaintability, low emissions of odor, durability and resistance to ageing and weathering. Furthermore, the inventive composition is safe to handle without special protective measures.

### Ways of executing the invention

The present invention relates in a first aspect to a curable polyurethane composition comprising
- at least one isocyanate group-containing polyurethane polymer **P** with a maximal content of 0.5 wt.-% of monomeric diisocyanate obtained from the reaction of at least one diisocyanate monomer with at least one polyether polyol in an NCO/OH molar ratio of at least 3/1 and by subsequent removal of the majority of the monomer diisocyanate using a suitable separation method;
- at least one isocyanurate silane **IS;**
- optionally fillers, catalysts, plasticizers, drying agents, stabilizers, latent amines, other reactive silane group components and further additives.

The term "radical" is used in this document in a formal sense, meaning a molecular rest bound to an atom by a covalent bond, while the bond is formally "cut" to describe the molecular rest attached to it.

Substance names beginning with "poly", such as polyol or polyisocyanate, refer to substances containing, in a formal sense, two or more of the functional groups that occur in their name per molecule.

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

The term "silane" or "organosilane" or "reactive silane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

"Monomeric diisocyanate" refers to an organic compound having two isocyanate groups separated by a divalent hydrocarbyl radical having 4 to 15 carbon atoms.

An "aromatic" isocyanate group refers to an isocyanate bonded directly to an aromatic carbon atom. Isocyanates having exclusively aromatic isocyanate groups are correspondingly referred to as "aromatic isocyanates".

An "aliphatic" isocyanate group refers to an isocyanate bonded directly to an aliphatic or cycloaliphatic carbon atom. Isocyanates having exclusively aliphatic isocyanate groups are correspondingly referred to as "aliphatic isocyanates".

A "monomeric aromatic diisocyanate" refers to a monomeric diisocyanate having aromatic isocyanate groups.

A "polyurethane" refers to a polymer composed of organic units joined by urethane (carbamate) links. The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

A "polyetherurethane polymer" refers to a polymer having ether groups as repeat units and additionally containing urethane groups.

The term "NCO" refers to the isocyanate functional group. "NCO content" refers to the content of isocyanate groups in % by weight.

The term "OH" refers to the alcohol functional group. "OH content" refers to the content of alcohol groups in % by weight.

"Molecular weight" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

The term "molar ratio" in connection with reactive groups relates to the ratio of the number of molar equivalents of the corresponding reactive groups.

"Overpaintability" describes the degree of ability of a material to withstand staining of the paint surface and delamination between material and paint after application of paint to the material's surface.

The polyurethane composition comprising the isocyanate group-containing polymers is "curable", especially "moisture-curing", meaning that in the presence of water or moisture, more particularly atmospheric moisture the above-described diisocyanate polyaddition process takes place, causing crosslinking of the polymer molecules and curing of the material. The curing is also referred to as crosslinking.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted or dashed line in the formulae in this document in each case represents the bond between a substituent and the corresponding molecular radical.

All industrial standards and norms cited in this document refer to the respective edition in force on the time of filing of the first application of this invention, if not otherwise defined.

The curable polyurethane composition according to the invention comprises at least one isocyanate group-containing polyurethane polymer **P,** which is obtained from the reaction of at least one diisocyanate monomer and the polyether polyol in an NCO/OH molar ratio of at least 3/1. The NCO/OH ratio is preferably in the range from 3/1 to 10/1, more preferably in the range from 3/1 to 8/1, especially in the range from 4/1 to 7/1.

The reaction is preferably conducted with exclusion of moisture at a temperature in the range from 20 to 160° C., especially 40 to 140° C., optionally in the presence of suitable catalysts. After the reaction, the monomeric diisocyanate remaining in the reaction mixture is removed by means of a suitable separation method down to the maximal residual content of 0.5 wt.-%.

A preferred separation method is a distillative method, especially thin-film distillation or short-path distillation, preferably with application of reduced pressure. Particular preference is given to a multistage method in which the monomeric aromatic diisocyanate is removed in a short-path evaporator with a jacket temperature in the range from 120 to 200° C. and a pressure of 0.001 to 0.5 mbar.

In a preferred embodiment, curable polyurethane composition consists of less than 0.5 wt.-% of monomeric diisocyanate, most preferably less than 0.1 wt.-% of monomeric diisocyanate.

In the reaction, the OH groups of the polyether polyol react with the isocyanate groups of the monomeric diisocyanate. This also results in what are called chain extension reactions, in that there is reaction of OH groups and/or isocyanate groups of reaction products between polyol and monomeric diisocyanate. The higher the NCO/OH ratio chosen, the lower the level of chain extension reactions that takes place, and the lower the polydispersity and hence also the viscosity of the polymer obtained. A measure of the chain extension reaction is the average molecular weight of the polymer, or the breadth and distribution of the peaks in the GPC analysis. A further measure is the effective NCO content of the polymer freed of monomers relative to the theoretical NCO content calculated from the reaction of every OH group with a monomeric diisocyanate.

In a preferred embodiment, the diisocyanate monomers for synthesizing the isocyanate group-containing polyurethane polymer **P** are aromatic, aliphatic or cycloaliphatic diisocyanates, in particular methylene diphenyl diisocyanates (MDI) and/lor isophorene diisocyanate (IPDI) and/or toluene diisocyanate (TDI).

Preferably, the diisocyanate monomers are commercially available.

In other preferred embodiments, the diisocyanate monomers for synthesizing the isocyanate group-containing polyurethane polymer **P** is 4,4'-diphenylmethane diisocyanate, where appropriate with proportions of 2,4'- and/or 2,2'-diphenylmethane diisocyanate (MDI), 2,4-toluene diisocyanate or mixtures thereof with 2,6-toluene diisocyanate (TDI), 1,4-phenylene diisocyanate (PDI), naphthalene-1,5-diisocyanate (NDI), 1,6-hexane diisocyanate (HDI), 2,2(4),4-trimethyl-1,6-hexamethylene diisocyanate (TMDI), cyclohexane-1,3- or -1,4-diisocyanate, 1-isocyanato-3,3, 5-trimethyl-5-isocya-natomethylcyclohexane (isophorone diisocyanate or IPDI), perhydro-2,4'- or - 4,4'-diphenylmethane diisocyanate (HMDI), 1,3- or 1,4-bis(isocyanatomethyl)-cyclohexane, m- or p-xylylene diisocyanate (XDI), or mixtures thereof. Of these, MDI, TDI, HDI or IPDI is preferred. IPDI or MDI is particularly preferred. Most preferred is MDI, in particular 4,4'-diphenylmethane diisocyanate (4,4'-MDI). In particular, the 4,4'-MDI is of a quality that contains only small amounts of 2,4'- and/or 2,2'-diphenylmethane diisocyanate and is solid at room temperature.

The isocyanate groups of the isocyanate group-containing polyurethane polymer **P** are thus preferably derived from 4,4'-diphenylmethane diisocyanate. Such a polymer cures particularly quickly and enables particularly high strengths.

The polyether polyol has an average OH functionality in the range from 2.2 to 2.6. Especially preferred polyether polyols are polyether triols. As a result of their production, commercial polyether triols contain a certain content of monools, resulting in an average OH functionality below 3. They thus typically contain trifunctional and monofunctional components.

Repeat units present in the polyether polyol are preferably 1,2-ethyleneoxy, 1,2-propyleneoxy, 1,3-propyleneoxy, 1,2-butyleneoxy or 1,4-butyleneoxy groups. Preference is given to 1,2-ethyleneoxy (EO) and/or 1,2-propyleneoxy (PO) groups. More preferably, repeat units present in the polyether polyol are mainly or exclusively 1,2-propyleneoxy groups.

In a preferred embodiment, the polyether polyols for synthesizing the isocyanate group-containing polyurethane polymer **P** contain between 80 to 100 wt.-% of 1,2-propyleneoxy (PO) groups and between 0 and 20 wt.-% of other repeat units such as 1,2-ethyleneoxy (EO) groups and/or propyleneoxy-ethylenoxy (PO-EO) groups.

Most preferably, the polyether polyol, based on all repeat units, has 80% to 90% by weight of 1,2-propyleneoxy groups and 10% to 20% by weight of 1,2-ethyleneoxy groups. The 1,2-propyleneoxy groups and the 1,2-ethyleneoxy groups here each form homogeneous blocks, and the poly(1,2-ethyleneoxy) blocks are at the chain ends. Such a polyether polyol enables moisture-curing polyurethane compositions having particularly rapid curing and particularly good heat stability.

Preferably, the polyether polyols are commercially available.

The polyether polyol preferably has an OH number in the range from 25 to 32 mg KOH/g and, based on all repeat units, has 80% to 90% by weight of 1,2-propyleneoxy groups and 10% to 20% by weight of 1,2-ethyleneoxy groups. Such a polymer enables moisture-curing polyurethane compositions having a particularly attractive combination of low viscosity, long open time coupled with rapid curing and high elasticity and strength. The polyether polyol preferably has an average molecular weight Mₙ in the range from 4'000 to 8'500 g/mol.

In a preferred embodiment, the polyether polyols for synthesizing the isocyanate group-containing polyurethane polymer **P** have an average molecular weight Mₙ of 2'500 to 20'000 g/mol, preferably 4'000 to 15'000 g/mol.

Preferably, the isocyanate group-containing polyurethane polymer **P** has an average molecular weight Mₙ in the range of 6'000 to 30'000 g/mol.

In addition to the isocyanate group containing polyurethane polymer **P,** the inventive curable polyurethane composition may contain at least one additional polymer containing isocyanate groups. Suitable additional polymers containing isocyanate groups are conventionally prepared polymers or other polymers that have been freed of monomers. Further polymers containing aromatic isocyanate groups are suitable, but also polymers containing aliphatic isocyanate groups. A preferred additional polymer containing isocyanate groups is a conventionally prepared polyurethane polymer containing isocyanate groups from the reaction of polyester diols or polycarbonate diols and monomeric diisocyanates in an NCO/OH ratio in the range from 1.5/1 to 2.5/1 and an NCO content in the range from 2% to 8% by weight. Preferred polyester dials are OH-functional polyesters of adipic acid or sebacic acid or dodecanedicarboxylic acid with butane-1,4-diol or hexane-1,6-diol or neopentyl glycol.

The isocyanate group-containing polyurethane polymer **P** preferably additionally contains at least one latent amine. A suitable latent amine preferably has at least one aldimine group or oxazolidine group. On contact with moisture, it is hydrolyzed with release of the amino group and reacts with available isocyanate groups, and can promote rapid, blister-free curing, a particularly non-tacky surface and/or particularly good mechanical properties.

Preferred oxazolidines are bisoxazolidines, especially those derived from isobutyraldehyde, benzaldehyde or substituted benzaldehyde, especially benzaldehyde substituted in the para position by an optionally branched alkyl group having 10 to 14 carbon atoms. Preference is given to bisoxazolidines from the reaction of OH-functional monooxazolidines with diisocyanates, especially hexamethylene 1,6-diisocyanate. Suitable monooxazolidines are especially obtained from the reaction of diethanolamine and an aldehyde with release and removal of water.

Suitable aldimines are especially di- or trialdimines from the reaction of commercial primary di- or triamines with non-enolizable aldehydes. These are aldehydes that do not have a hydrogen atom in the alpha position to the carbon atom of the aldehyde group.

The curable polyurethane composition according to the invention comprises at least one isocyanurate silane **IS.**

Isocyanurates are synthesized by a self-reaction of isocyanates, wherein the isocyanate groups trimerize to form the characteristic isocyanurate ring.

The inventive isocyanurate silane **IS** is obtained from the trimerization reaction of isocyanate silanes. The resulting chemical structure consists of the characteristic isocyanurate ring and the reactive silane groups connected to the N-atom on the ring via an aliphatic hydrocarbon chain.

Preferably, the inventive isocyanurate silane **IS** exhibits a structure according to formula (I) 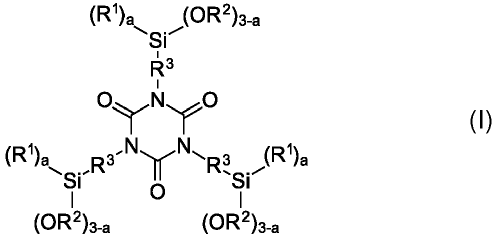 wherein
radical R¹ represents a linear or branched monovalent hydrocarbon radical having 1 to 4 carbon atoms and which optionally contains one or more C-C multiple bonds, and/or cycloaliphatic, and/or aromatic moieties, preferably methyl or ethyl;
radical R² represents an a linear or branched monovalent hydrocarbon radical having 1 to 5 carbon atoms and which optionally contains one or more C-C multiple bonds, and/or cycloaliphatic, and/or aromatic moieties, preferably methyl or ethyl;
radical R³ represents a linear or branched monovalent hydrocarbon radical having 1 to 16 carbon atoms and which optionally contains one or more heteroatoms and optionally one or more C-C multiple bonds, and/or cycloaliphatic, and/or aromatic moieties, preferably propyl;
a is 1 or 0.

Preferably, the amount of isocyanurate silane **IS** ranges between 0.1 and 5%, more preferably between 0.1 and 3%, most preferably between 0.1 and 2% by weight based on the total weight of the composition.

In a preferred embodiment, the isocyanurate silane **IS** is tris(3-(trimethoxysilyl)propyl)isocyanurate.

Preferably, the curable polyurethane composition according to the invention comprises additionally a filler. Suitable fillers are chalk, especially ground or precipitated calcium carbonates, sheet silicates, such as mica or talc, zeolites, aluminum hydroxides, magnesium hydroxides, silicas, including finely divided silicas from pyrolysis processes, cements, gypsums, fly ashes, industrially produced carbon blacks, graphite, metal powders, for example of aluminum, copper, iron, silver or steel, PVC powders or hollow beads, colloidal dispersions of small polymer particles (plastisol). Preferred substances for surface-treatment of calcium carbonates are fatty acids, especially stearates, calcined kaolins or industrially produced carbon blacks. Preferred plastisols are polyvinyl-chlored based plastisols.

In a preferred embodiment, the filler is selected from chalk, preferably calcium carbonate, most preferably a surface-treated ground calcium carbonate and/or a colloidal dispersion of small polymer particles (plastisol), preferably a polyvinyl-chloride (PVC) plastisol.

Preferably, the amount of filler ranges between 25 and 50%, more preferably between 25 and 45%, most preferably between 30 and 40% by weight based on the total weight of the composition.

Preferably, the curable polyurethane composition according to the invention comprises additionally a catalyst. Suitable catalysts are catalysts for the acceleration of the reaction of isocyanate groups, especially organotin (IV) compounds such as, in particular, dibutyltin diacetate, dibutyltin dilaurate (DBTL), dibutyltin dichloride, dibutyltin diacetylacetonate, dimethyltin dilaurate, dioctyltin diacetate, dioctyltin dilaurate or dioctyltin diacetylacetonate, complexes of bismuth(III) or zirconium(IV), especially with ligands selected from alkoxides, carboxylates, 1,3-diketonates, oxinate, 1,3-ketoesterates and 1,3-ketoamidates, or compounds containing tertiary amino groups, such as especially 2,2'dimorpholinodiethyl ether (DMDEE).

If the moisture-curing polyurethane composition contains latent amines, suitable catalysts are also catalysts for the hydrolysis of the latent amino groups, especially organic acids, especially carboxylic acids such as 2-ethylhexanoic acid, lauric acid, stearic acid, isostearic acid, oleic acid, neodecanoic acid, benzoic acid, salicylic acid or 2-nitrobenzoic acid, organic carboxylic anhydrides such as phthalic anhydride, hexahydrophthalic anhydride or methylhexahydrophthalic anhydride, silyl esters of carboxylic acids, organic sulfonic acids such as methanesulfonic acid, p-toluenesulfonic acid or 4-dodecylbenzenesulfonic acid, sulfonic esters, other organic or inorganic acids, or mixtures of the aforementioned acids and acid esters. Particular preference is given to carboxylic acids, especially aromatic carboxylic acids, such as benzoic Also especially suitable are combinations of different catalysts.

In a preferred embodiment, the catalyst is selected from tin, bismuth or zirconium compounds, in particular organotin compounds, especially dialkylltin compounds such as dibutyltin dilaurate (DBTL) or dioctyltin carboxylates.

Preferably, the amount of catalyst ranges between 0.01 and 1%, more preferably between 0.01 and 0.5%, most preferably between 0.01 and 0.1% by weight based on the total weight of the composition.

Preferably, the curable polyurethane composition according to the invention comprises additionally a plasticizer. Suitable plasticizers are especially carboxylic acid esters, such as phthalates, especially diisononyl phthalate (DINP), diisodecyl phthalate (DIDP) or di(2-propylheptyl) phthalate (DPHP), bis(2-ethylhexyl) phthalate (DEHP), bis(2-ethylhexyl) adipate (DEHA), hydrogenated phthalates, especially hydrogenated diisononyl phthalate or diisononyl cyclohexane-1,2-dicarboxylate (DINCH), terephthalates, especially bis(2-ethylhexyl) terephthalate or diisononyl terephthalate, hydrogenated terephthalates, especially hydrogenated bis(2-ethylhexyl) terephthalate or diisononyl terephthalate, or bis(2-ethylhexyl) cyclohexane-1,4-dicarboxylate, trimellitates, adipates, especially dioctyl adipate, azelates, sebacates, benzoates, glycol ethers, glycol esters, organic phosphoric or sulfonic acid esters, polybutenes, polyisobutenes or plasticizers derived from natural fats or oils, especially epoxidized soybean or linseed oil.

In a preferred embodiment, the plasticizer is selected from carboxylic acid esters, such as phthalates and terephthalates, hydrogenated phthalates, hydrogenated terephthalates, trimellitates, adipates, azelates, sebacates, benzoates, glycol ethers, glycol esters, polyols, preferably bis(2-ethylhexyl) phthalate (DEHP), bis(2-ethylhexyl) adipate (DEHA), diisodecyl phthalate (DIDP).

Preferably, the amount of plasticizer ranges between 5 and 40%, more preferably between 10 and 35%, most preferably between 15 and 30% by weight based on the total weight of the composition.

The curable polyurethane composition preferably contains further additives, such as dyes and pigments, especially inorganic or organic pigments, especially titanium dioxide, chromium oxides or iron oxides.

Preferably, the amount of pigments ranges between 0 and 5%, more preferably between 0.1 and 3%, most preferably between 0.1 and 2% by weight based on the total weight of the composition.

Further preferred additives include fibers, especially glass fibers, carbon fibers, metal fibers, ceramic fibers, polymer fibers, such as polyamide fibers or polyethylene fibers, or natural fibers, such as wool, cellulose, hemp or sisal; nanofillers such as graphene or carbon nanotubes.

Further preferred additives include desiccants and drying agents, especially molecular sieve powder, calcium oxide, highly reactive isocyanates such as p-tosyl isocyanate or orthoformic esters.

Further preferred additives include other reactive silane group components, especially organoalkoxysilanes, especially epoxysilanes, such as especially 3-glycidoxypropyltrimethoxysilane or 3-glycidoxypropyltriethoxysilane, (meth)acrylosilanes, anhydridosilanes, carbamatosilanes, alkylsilanes or iminosilanes, or oligomeric forms of these silanes, or titanates.

Further preferred additives include further catalysts which accelerate the reaction of the isocyanate groups, especially salts, soaps or complexes of tin, zinc, bismuth, iron, aluminum, molybdenum, dioxomolybdenum, titanium, zirconium or potassium, especially tin(II) 2-ethylhexanoate, tin(II) neodecanoate, zinc(II) acetate, zinc(II) 2-ethylhexanoate, zinc(II) laurate, zinc(II) acetylacetonate, aluminum lactate, aluminum oleate, diisopropoxytitanium bis (ethyl acetoacetate) or potassium acetate; compounds containing tertiary amino groups, especially N-ethyldiisopropylamine, N,N,N' ,N'-tetramethylalkylenediamines, pentamethylalkylenetriamines and higher homologs thereof, bis(N,N-diethylaminoethyl) adipate, tris(3-dimethylaminopropyl)amine, 1,4-diazabicyclo[2.2.2]octane (DABCO), 1,8-diazabicyclo[S.4.0]undec7-ene (DBU), 1,5-diazabicyclo[ 4.3 .0]non-5-ene(DBN), N-alkylmorpholines, N,N'-dimethylpiperazine; aromatic nitrogen compounds, such as 4-dimethylaminopyridine, N-methylimidazole, N-vinylimidazole or 1,2-dimethylimidazole; organic annnonium compounds, such as benzyltrimethylammonium hydroxide or alkoxylated tertiary amines; what are called "delayed action" catalysts, which are modifications of known metal or amine catalysts.

Further preferred additives include rheology modifiers and thixotropic agents, especially thickeners, especially sheet silicates, such as bentonites, derivatives of castor oil, hydrogenated castor oil, polyamides, polyamide waxes, polyurethanes, urea compounds, fumed silicas, cellulose ethers or hydrophobically modified polyoxyethylenes. Especially preferred thixotropic agents are thickener pastes made from diisocyanates and monoamines and phthalate-based plasticizers.

Preferably the amount of thixotropic agents, especially thickener paste, ranges between 5 and 30%, more preferably between 10 and 30%, most preferably between 15 and 25% by weight based on the total weight of the composition.

Further preferred additives include solvents, especially acetone, methyl acetate, tertbutyl acetate, I-methoxy-2-propyl acetate, ethyl 3-ethoxypropionate, diisopropyl ether, diethylene glycol diethyl ether, ethylene glycol diethyl ether, ethylene glycol monobutyl ether, ethylene glycol mono-2-ethylhexyl ether, acetals such as propylal, butylal, 2-ethylhexylal, dioxolane, glycerol formal or 2,5,7,10-tetraoxaundecane, toluene, xylene, heptane, octane, naphtha, white spirit, petroleum ether or gasoline, especially Solvesso^{™} grades (from Exxon), and propylene carbonate, dimethyl carbonate, butyrolactone, N-methylpyrrolidone, N-ethylpyrrolidone, p-chlorobenzotrifluoride or benzotrifluoride.

Further preferred additives include natural resins, fats or oils, such as rosin, shellac, linseed oil, castor oil or soybean oil.

Further preferred additives include non-reactive polymers, especially homo- or copolymers of unsaturated monomers, especially from the group comprising ethylene, propylene, butylene, isobutylene, isoprene, vinyl acetate or alkyl (meth) acrylates, especially polyethylenes (PE), polypropylenes (PP), polyisobutylenes, ethylene-vinyl acetate copolymers (EVA) or atactic poly-a-olefins (APAO).

Further preferred additives include flame-retardant substances, especially the aluminum hydroxide or magnesium hydroxide fillers already mentioned, and also especially organic phosphoric acid esters, such as especially triethyl phosphate, tricresyl phosphate, triphenyl phosphate, diphenyl cresyl phosphate, isodecyl diphenyl phosphate, tris(I ,3-dichloro-2-propyl) phosphate, tris(2-chloroethyl) phosphate, tris(2-ethylhexyl) phosphate, tris( chloroisopropyl)phosphate, tris( chloropropyl) phosphate, isopropylated triphenyl phosphate, mono-, bis- or tris(isopropylphenyl) phosphates of different degrees of isopropylation, resorcinol bis(diphenylphosphate), bisphenol A bis(diphenylphosphate) or ammonium polyphosphates.

Further preferred additives include wetting agents, leveling agents, defoamers, deaerators, stabilizers against oxidation, heat, light or UV radiation, or biocides or other substances customarily used in curable polyurethane compositions.

In a preferred embodiment, the curable polyurethane composition comprises at least one of additional component selected from stabilizers, latent amines, other reactive silane group components and further additives.

In a preferred embodiment, the curable polyurethane composition comprises
- 25 - 50 wt.-% of polymer **P;**
- 0.1 - 5 wt.-% of isocyanurate silane **IS;**
- 25 - 50 wt.-% of filler;
- 5 - 40 wt.-% of plasticizer;
- 5 - 30 wt.-% of thixotropic agent;
- 0.01 - 1 wt.-% of catalyst;
- 0 - 5 wt.-% of pigment.

Suitable substrates which can be bonded or sealed or coated with the moisture-curing polyurethane composition are especially glass, glass ceramic, concrete, mortar, cement screed, fiber cement, especially fiber cement boards, brick, tile, gypsum, especially gypsum boards or anhydride screed, or natural stone, such as granite or marble; repair or leveling compounds based on PCC (polymer-modified cement mortar) or ECC (epoxy resin-modified cement mortar); metals or alloys, such as aluminum, copper, iron, steel, nonferrous metals, including surface-finished metals or alloys, such as zinc-plated or chromiumplated metals; asphalt or bitumen; leather, textiles, paper, wood, wood materials bonded with resins, such as phenolic, melamine or epoxy resins, resin/textile composites or further materials called polymer composites; plastics, such as rigid and flexible PVC, polycarbonate, polystyrene, polyester, polyamide, PMMA, ABS, SAN, epoxy resins, phenolic resins, PUR, POM TPO, PE, PP, EPM or EPDM, in each case untreated or surface-treated, for example by means of plasma, corona or flames; fiber-reinforced plastics, such as carbon fiberreinforced plastics (CFP), glass fiber-reinforced plastics (GFP) and sheet molding compounds (SMC); insulation foams, especially made of EPS, XPS, PUR, PIR, rock wool, glass wool or foamed glass; coated or painted substrates, especially painted tiles, coated concrete, powder-coated metals or alloys or painted metal sheets; paints or varnishes, especially automotive topcoats.

It is possible to bond and/or seal two identical or two different substrates.

Another aspect of the invention relates to a method of bonding or sealing comprising the steps of
i) applying the curable polyurethane composition described
   - to a first substrate and contacting the composition with a second substrate within the open time of the composition, or
   - to a first and to a second substrate and joining the two susbstrates within the open time of the composition, or
   - between two substrates
ii) curing the composition by contact with moisture from ambient air or added water.

The invention further relates to a method of coating comprising the steps of
i) applying the curable polyurethane composition described to a substrate
ii) curing the composition by contact with moisture from ambient air or added water.

The application and curing of the moisture-curing polyurethane composition or the method of bonding or sealing affords an article bonded or sealed with the composition. Thus, the invention provides an article obtained from the described method of bonding or sealing.

This article may be a built structure or a part thereof, especially a built structure in civil engineering above or below ground, a bridge, a roof, a staircase or a facade, or it may be an industrial good or a consumer good, especially a window, a pipe, a rotor blade of a wind turbine, a domestic appliance or a mode of transport, such as especially an automobile, a bus, a truck, a rail vehicle, a ship, an aircraft or a helicopter, or an installable component thereof.

Yet another aspect of the invention relates to the use of the curable polyurethane composition as industrial sealant or adhesive, in particular on metals, plastic, glass and paint coatings.

### Examples

Adduced hereinafter are working examples which are intended to elucidate the invention described in detail. It will be appreciated that the invention is not restricted to these described working examples.

The term "standard climatic conditions" refers to a temperature of 23±1°C and a relative air humidity of 50±5%.

### Synthesis of low monomer polyurethane polymer P

### Polymer P1

725.0 g of Desmophen^{®} 5031 BT and 275.0 g of 4,4'-diphenylmethane diisocyanate (Desmodur^{®} 44 MC L, from Covestro) were reacted according to the known procedure to form a polyether urethane polymer with an NCO content of 7.6 % by weight, a viscosity of 6.5 Pa-s at 20 °C and a 4,4'-diphenylmethane diisocyanate content of approx. 20 % by weight. Subsequently, the volatile components, in particular a large part of the 4,4'-diphenylmethane diisocyanate, were removed as described for polymer DP-1. The resulting polyether urethane polymer had an NCO content of 1.7 % by weight, a viscosity of 19 Pa·s at 20 °C and a 4,4'-diphenylmethane diisocyanate content of 0.04 % by weight.

### Polymer P2

780.0 g Desmophen^{®} 5031 BT (glycerol-launched ethylene oxide-terminated polyoxypropylene triol, OH number 28.0 mg KOH/g, OH functionality approx. 2. 3; from Covestro) and 220 g 1-isocyanato-3,3,5-trimethyl-5-isocyanatomethylcyclohexane (Vestanat^{®} IPDI, from Evonik) were reacted at 80 °C according to the known procedure to form a polyetherurethane polymer with an NCO content of 6.4 % by weight, a viscosity of 4.1 Pa·s at 20 °C and a content of monomeric IPDI of approx. 12 % by weight. Subsequently, the volatile components, in particular the majority of the monomeric IPDI, were removed by distillation in a short path evaporator (jacket temperature 160 °C, pressure 0.1 to 0.005 mbar). The resulting polyether urethane polymer had an NCO content of 1.9 % by weight, a viscosity of 8.2 Pa·s at 20 °C and a monomeric IPDI content of 0.02 % by weight.

### Synthesis of reference polymer RP

685 g Voranol^{®} CP 4755 (glycerol-launched ethylene oxide-terminated polyoxypropylene triol, OH number 35.0 mg KOH/g, OH functionality approx. 2.4; from Dow), 115 g 4,4'-diphenylmethane diisocyanate (Desmodur^{®} 44 MC L, from Covestro) and 200 g diisodecyl phthalate were reacted at 80 °C according to the known procedure to form a polyether urethane polymer with an NCO content of 1.9 % by weight and a content of monomeric 4,4'-diphenylmethane diisocyanate of approx. 2.1 % by weight.

### Synthesis of thickener paste

The thickener paste was prepared by placing 300 g of diisodecyl phthalate and 48 g of 4,4'-diphenylmethane diisocyanate (Desmodur^{®} 44 MC L; from Covestro) in a vacuum mixer, heating slightly and then slowly adding 27 g of monobutylamine while stirring vigorously. The resulting paste was stirred for one hour under vacuum and cooling.

### Test method

The **adhesion** was tested according to DIN 54457 standard: "Testing of adhesively bonded joints". A sealant bead is applied onto the treated surface of the substrate and cured according to test plan or test instruction. Different predefined standard storage conditions are described in test method.

The first storage condition should always ensure full curing and proper adhesion build up to the substrate or primer.

For the adhesion test, the substrate surface was either **pre-treated** (pt.) or **non pre-treated** (n.-pt.). The pre-treatment involved wiping of the surface with a clean, lint-free paper fleece moistened with Sika^{®} activator-205. The surface was then allowed to dry for at least 10 minutes.

After application of the composition to the substrates, the material was stored under either one of the following conditions:

| | |
|---|---|
| NC | 7 days norm climate, i.e. standard climatic conditions; |
| WL | 7 days under water at 23°C; |
| HL | 1 day at 80°C; |
| CP | 7 days at 70°C and 100% RH |

The adhesion was the evaluated by eye according to the following codes.

| | |
|---|---|
| 1 | more than 95% cohesive failure, 0-5% adhesive failure; |
| 2 | 75-95% cohesive failure, 5-25% adhesive failure; |
| 3 | 25-75% cohesive failure, 25-75% adhesive failure; |
| 4 | 20-40% cohesive failure, 60-80% adhesive failure; |
| 5 | less than 25% cohesive failure, more than 25% adhesive failure |

Thereby 1 and 2 correspond to sufficient adhesion and 3-5 to insufficient adhesion.

### Compounds used in compositions

**Table 1: Compounds used for the example compositions.**

| **Name** | | **Description** | **Trade name** |
|---|---|---|---|
| Polymer **P** | **P1** | Low monomer polyether polyurethane (MDI) polymer | Synthesis (see above) |
| | **P2** | Low monomer polyether polyurethane (IPDI) polymer | Synthesis (see above) |
| Reference polymer **RP** | | polyether polyurethane polymer | Synthesis (see above) |
| Isocyanurate-silane **IS** | | reactive silane group-containing isocyanurate | Silquest^{™} A-Link^{©} 597 |
| Reference adhesion promoter **RAP** | | Epoxy-functional silane | Siluest A-187^{™} |
| Filler | | Coated ground calcium carbonate (GCC) | Omya BLH |
| Plasticizer | | Di-(2-ethylhexyl) adipate | Plastomoll^{®} DOA |
| Thixotropic agent | | Thickener paste | Synthesis (see above) |
| Catalyst | | Dibutyltin dilaurate | |
| Pigment | | Titanium dioxide | |

### Substrates used in adhesion tests

**Table 2: Substrates used for the adhesion tests.**

| **Name** | **Description** | **Norm** |
|---|---|---|
| Alu | Anodized Aluminum | ISO 7583 |
| AlMg1 | ca. 1% Mg | EN-AW5005 |
| AlMg3 | ca. 3% Mg | EN-AW5754 |
| AlMgSi1 | ca. 0.6% Mg, 0.7% Si | EN-AW6082 |
| Steel (EG.) | Electro-galvanized Steel | EN 10131 |
| Steel (HDG) | Hot-dipped galvanized | EN ISO 1461 |
| Steel (SS) | Stainless Steel | EN 10088 |
| Float glass | tin-side | EN 572 |
| Fiber glass | air-side | EN 13706 |

### Compositions used in adhesion tests

Comparative examples, containing commercial reactive plasticizer, are identified in Tables 3 to 4 by "(Ref.)".

Reference example **E1** contains a reference polymer **RP,** which has a content of monomeric diisocyanate higher 0.5 wt.-% and reference adhesion promoter **RAP,** but neither inventive polymer **P** nor inventive isocyanurate silane **IS.** Reference example **E2** contains the inventive polymer **P,** which has a maximal content of 0.5 wt.-% of monomeric diisocyanate, but reference adhesion promoter **RAP** instead of inventive isocyanurate silane **IS.**

Inventive example **E3** contains both the inventive polymer **P** and the inventive isocyanurate silane **IS.**

**Table 3: Compositions used in adhesion tests. Values are in wt.-% totaling 100%.**

| **Example compositions** | **E1** (Ref.) | **E2** (Ref.) | **E3** |
|---|---|---|---|
| Polymer **P1** | - | 24.00 | 24.00 |
| Polymer **P2** | - | 8.00 | 8.00 |
| Reference polymer **RP** | 32.00 | - | - |
| Isocyanurate silane **IS** | - | - | 0.50 |
| Reference adhesion promoter **RAP** | 0.50 | 0.50 | - |
| Filler | 34.50 | 34.50 | 34.50 |
| Plasticizer | 5.00 | 5.00 | 5.00 |
| Thixotropic agent | 23.00 | 23.00 | 23.00 |
| Catalyst | 0.50 | 0.50 | 0.50 |
| Pigment | 4.50 | 4.50 | 4.50 |

### Adhesion tests

The test results show improved adhesion of the inventive composition **E3** when compared to reference examples **E1** and **E2.**

**Table 4: Adhesion tests.**

| **Test results** | | **E1** (Ref.) | | | | **E2** (Ref.) | | | | **E3** | | | |
|---|---|---|---|---|---|---|---|---|---|---|---|---|---|
| | | NC | WL | HL | CP | NC | WL | HL | CP | NC | WL | HL | CP |
| Alu | pt. | 1 | 1 | 1 | 1 | 1 | 1 | 1 | 1 | 1 | 1 | 1 | 1 |
| | n.-pt. | 5 | 4 | 1 | 1 | 5 | 3 | 1 | 1 | 1 | 1 | 1 | 1 |
| AlMg1 | pt. | 1 | 1 | 1 | 1 | 1 | 1 | 2 | 2 | 1 | 1 | 1 | 1 |
| | n.-pt. | 4 | 3 | 1 | 1 | 4 | 3 | 3 | 2 | 1 | 1 | 1 | 1 |
| AlMg3 | pt. | 1 | 1 | 1 | 1 | 1 | 3 | 1 | 2 | 1 | 1 | 1 | 1 |
| | n.-pt. | 4 | 4 | 1 | 2 | 4 | 5 | 1 | 2 | 3 | 3 | 1 | 2 |
| AlMgSi1 | pt. | 1 | 1 | 1 | 1 | 2 | 2 | 1 | 1 | 1 | 1 | 1 | 1 |
| | n.-pt. | 5 | 5 | 2 | 1 | 5 | 5 | 5 | 4 | 4 | 2 | 2 | 1 |
| Steel (EG) | pt. | 1 | 1 | 3 | 4 | 1 | 2 | 1 | 1 | 1 | 1 | 1 | 1 |
| | n.-pt. | 3 | 4 | 3 | 2 | 2 | 1 | 1 | 2 | 1 | 1 | 1 | 2 |
| Steel (HG) | pt. | 1 | 2 | 1 | 1 | 3 | 2 | 1 | 1 | 1 | 1 | 1 | 1 |
| | n.-pt. | 3 | 5 | 1 | 2 | 3 | 5 | 1 | 4 | 1 | 2 | 1 | 1 |
| Steel (SS) | pt. | 1 | 1 | 1 | 1 | 1 | 2 | 1 | 1 | 1 | 1 | 1 | 1 |
| | n.-pt. | 5 | 5 | 1 | 4 | 5 | 5 | 3 | 4 | 2 | 1 | 1 | 1 |
| Floatglass | pt. | 1 | 1 | 1 | 1 | 1 | 1 | 1 | 1 | 1 | 1 | 1 | 1 |
| | n.-pt. | 1 | 2 | 3 | 3 | 1 | 1 | 1 | 2 | 1 | 1 | 1 | 2 |
| Fiberglass | pt. | 1 | 1 | 1 | 1 | 2 | 1 | 1 | 1 | 1 | 1 | 1 | 1 |
| | n.-pt. | 1 | 1 | 1 | 1 | 1 | 1 | 2 | 1 | 1 | 1 | 1 | 1 |

## Claims

1. A curable polyurethane composition comprising
- at least one isocyanate group-containing polyurethane polymer **P** with a maximal content of 0.5 wt.-% of monomeric diisocyanate obtained from the reaction of at least one diisocyanate monomer with at least one polyether polyol in an NCO/OH molar ratio of at least 3/1 and by subsequent removal of the majority of the monomer diisocyanate using a suitable separation method;
- at least one isocyanurate silane **IS;**
- optionally fillers, catalysts, plasticizers, drying agents, stabilizers, latent amines, other reactive silane group components and further additives.

2. The curable composition according to claim 1, wherein the polyether polyols for synthesizing the polymer **P** contain between 80 to 100 wt.-% of 1,2-propyleneoxy (PO) groups and between 0 and 20 wt.-% of other repeat units such as 1,2-ethyleneoxy (EO) groups and/or propyleneoxy-ethylenoxy (PO-EO) groups.

3. The curable composition according to claims 1 to 2, wherein the diisocyanate monomers for synthesizing the polymer **P** are aromatic, aliphatic or cycloaliphatic diisocyanates, in particular methylene diphenyl diisocyanates (MDI) or isophorene diisocyanate (IPDI) or toluene diisocyanate (TDI).

4. The curable composition according to claims 1 to 3, wherein the polyether polyols for synthesizing the polymer **P** have an average molecular weight Mₙ of 2'500 to 20'000 g/mol, preferably 4'000 to 15'000 g/mol.

5. The curable composition according to claims 1 to 4, wherein isocyanurate silane **IS** is a structure according to formula (I) 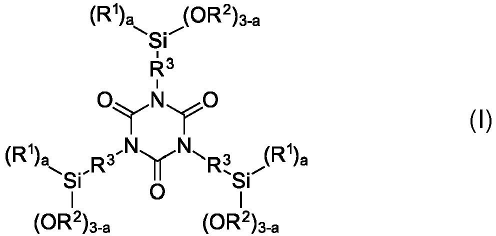 wherein
radical R¹ represents a linear or branched monovalent hydrocarbon radical having 1 to 4 carbon atoms and which optionally contains one or more C-C multiple bonds, and/or cycloaliphatic, and/or aromatic moieties, preferably methyl or ethyl;
radical R² represents an a linear or branched monovalent hydrocarbon radical having 1 to 5 carbon atoms and which optionally contains one or more C-C multiple bonds, and/or cycloaliphatic, and/or aromatic moieties, preferably methyl or ethyl;
radical R³ represents a linear or branched monovalent hydrocarbon radical having 1 to 6 carbon atoms and which optionally contains one or more heteroatoms and optionally one or more C-C multiple bonds, and/or cycloaliphatic, and/or aromatic moieties, preferably propyl;
a is 1 or 0.

6. The curable composition according to claim 1 to 5, wherein the isocyanurate silane **IS** is tris(3-(trimethoxysilyl)propyl)isocyanurate.

7. The curable composition according to claim 1 to 6 comprising a catalyst selected from tin, bismuth or zirconium compounds, in particular organotin compounds, especially dibutyltin compounds such as dibutyltin dilaurate (DBTL)

8. The curable composition according to claim 1 to 7 comprising a filler selected from chalk, preferably calcium carbonate, most preferably a surface-treated ground calcium carbonate and/or a colloidal dispersion of small polymer particles (plastisol), preferably a polyvinyl-chloride (PVC) plastisol.

9. The curable composition according to claims 1 to 8 comprising a plasticizer selected from carboxylic acid esters, such as phthalates and terephthalates, hydrogenated phthalates, hydrogenated terephthalates, trimellitates, adipates, azelates, sebacates, benzoates, glycol ethers, glycol esters, polyols, preferably bis(2-ethylhexyl) phthalate (DEHP), bis(2-ethylhexyl) adipate (DEHA), diisodecyl phthalate (DIDP).

10. The curable composition according to claims 1 to 9, wherein the composition comprises at least one of additional component selected from stabilizers, latent amines, other reactive silane group components and further additives.

11. The curable composition, according to claims 1 to 10 **characterized in that** said composition comprises
- 25 - 50 wt.-% of polymer **P;**
- 0.1 - 5 wt.-% of isocyanurate silane **IS;**
- 25 - 50 wt.-% of filler;
- 5 - 40 wt.-% of plasticizer;
- 5 - 30 wt.-% of thixotropic agent;
- 0.01 - 1 wt.-% of catalyst;
- 0 - 5 wt.-% of pigment;

12. The curable composition according to claim 1 to 11, wherein the composition consists of less than 0.5 wt.-% of monomeric diisocyanate, most preferably less than 0.1 wt.-% of monomeric diisocyanate

13. A method of bonding or sealing comprising the steps of
i) applying the curable polyurethane composition according to claims 1 to 12
- to a first substrate and contacting the composition with a second substrate within the open time of the composition, or
- to a first and to a second substrate and joining the two substrates within the open time of the composition, or
- between two substrates
ii) curing the composition by contact with moisture from ambient air or added water.

14. Articles obtained by the method according to claim 13.

15. Use of a curable composition according to the claims 1 to 12 as industrial sealant or adhesive, in particular on metals, plastic, glass and paint coatings.
